# EUROPÄISCHE PATENTSCHRIFT

(11) **EP 4 399 488 B1**
(45) Veröffentlichungstag und Bekanntmachung des Hinweises auf die Patenterteilung: **15.10.2025**
(21) Anmeldenummer: 22764313.7
(22) Anmeldetag: 02.08.2022
(51) Int. Cl.: G01C 21/36, G01C 21/00, G06V 20/56

(54) **VERFAHREN ZUM POSITIONIEREN EINER KARTENDARSTELLUNG EINES UMFELDS EINES FAHRZEUGS IN EINER SEMANTISCHEN STRASSENKARTE**
METHOD FOR POSITIONING A MAP DISPLAY OF SURROUNDINGS OF A VEHICLE IN A SEMANTIC ROAD MAP
PROCÉDÉ DE POSITIONNEMENT D'UN AFFICHAGE CARTOGRAPHIQUE DE L'ENVIRONNEMENT D'UN VÉHICULE DANS UNE CARTE ROUTIÈRE SÉMANTIQUE

(30) Priorität: 06.09.2021 DE 102021209786
(43) Veröffentlichungstag der Anmeldung: 17.07.2024
(73) Patentinhaber: Robert Bosch GmbH, 70442 Stuttgart (DE)
(72) Erfinder: WAGNER, Andre, 30161 Hannover (DE)
(86) Internationale Anmeldenummer: PCT/EP2022/071629
(87) Internationale Veröffentlichungsnummer: WO 2023/030802

(56) Entgegenhaltungen:
- EP-A1- 3 505 869
- EP-A1- 3 992 922
- WO-A1-2020/076610
- US-A1- 2020 098 135

## Beschreibung

Die Erfindung betrifft ein Verfahren zum Positionieren einer Kartendarstellung eines Umfelds eines Fahrzeugs in einer semantischen Straßenkarte.

### Stand der Technik

Zur präzisen Steuerung von Fahrzeugen, insbesondere von autonome fahrenden Fahrzeugen, werden detaillierte Kartendarstellungen des Umfelds des zu steuernden Fahrzeugs benötigt. Hierzu können während eines Fahrens des Fahrzeugs oder während hierfür ausgelegter Testfahrten von Fahrzeugen Daten des Umfelds aufgenommen und auf diesen Daten basierende semantische Straßenkarten mit semantischer Information bezüglich des Umfelds erstellt. Derartige Straßenkarten müssen jedoch durchgehend auf einem aktuelle Stand gehalten werden und mit zusätzlichen Details versehen werden.

Das Dokument US2020/098135 A1 offenbart ein Verfahren zur Bestimmung einer Position und Orientierung eines Fahrzeugs basierend auf einem Vergleich einer aus Bilddaten generierten lokalen Karte mit einer Referenzkarte.

Das Dokument EP3505869 A1 offenbart ebenfalls ein Verfahren zur Bestimmung einer Position einer Sensoreinrichtung basierend auf einem Vergleich eines aufgenommenen Bildes mit einem Zielbild in einer Karte.

Das Dokument WO2020/076610 A1 offenbart ein Verfahren zur Bestimmung einer Pose eines visuellen Sensors unter Verwendung einer 3D-Karte, welche basierend auf einer Mehrzahl von Deskriptoren für Schlüsselstellen in von dem visuellen Sensor aufgenommenen Bilddaten erstellt wurde.

Das nachveröffentlichte Dokument EP3992922 A1 offenbart ein Verfahren zur Bestimmung einer Position einer robotischen Vorrichtung und eines oder mehrerer Objekte in einer Umgebung der Vorrichtung und zur Erstellung einer volumetrischen semantischen Karte.

Es ist daher eine Aufgabe der Erfindung, ein verbessertes Verfahren zum Positionieren einer Kartendarstellung eines Umfelds eines Fahrzeugs in einer semantischen Straßenkarte bereitzustellen.

Diese Aufgabe wird durch das Verfahren zum Positionieren einer Kartendarstellung eines Umfelds eines Fahrzeugs in einer semantischen Straßenkarte des unabhängigen Anspruchs 1 gelöst. Vorteilhafte Ausgestaltungen sind Gegenstand der untergeordneten Ansprüche.

Hierdurch kann der technische Vorteil erreicht werden, dass ein verbessertes Verfahren zum Positionieren einer Kartendarstellung eines Umfelds eines Fahrzeugs in einer semantischen Straßenkarte bereitgestellt werden kann. Hierzu wird basierend auf Umfeldsensordaten wenigstens eines Umfeldsensors eines Fahrzeugs eine Kartendarstellung des durch die Umfeldsensordaten abgebildeten Umfelds des Fahrzeugs erstellt. Die Kartendarstellung kann hierbei auf das unmittelbare Umfeld des Fahrzeugs begrenzt sein, und die im Umfeld angeordneten Objekte darstellt. Zum Positionieren der Kartendarstellung werden hierauf folgend charakteristische Elemente innerhalb der Kartendarstellung und charakteristische Elemente innerhalb der semantischen Straßenkarte ermittelt. Die charakteristischen Elemente können beispielsweise im Umfeld angeordnete Objekte sein, über die eine charakteristische Beschreibung des Umfelds ermöglicht ist. Die charakteristischen Elemente können beispielsweise durch Fahrbahnmarkierungen oder Straßenschilder innerhalb des Umfelds gebildet sein. In der semantischen Straßenkarte sind derartige Objekte als charakteristische Elemente inklusive semantischer Beschreibungen hinterlegt. Zum Ermitteln der Position werden die charakteristischen Elemente der Kartendarstellung mit den charakteristischen Elementen der Straßenkarte verglichen und ein Abschnitt innerhalb der semantischen Straßenkarte ermittelt, für den wenigstens ein charakteristisches Element des Abschnitts der semantischen Straßenkarte mit wenigstens einem charakteristischen Element der Kartendarstellung übereinstimmt. Die Position des Abschnitts innerhalb der semantischen Straßenkarte wird ferner als Positionierung der Kartendarstellung innerhalb der semantischen Straßenkarte identifiziert. Der Abschnitt kann hierbei Ausmaße ausweisen, die den Ausmaßen der Kartendarstellung entsprechen.

Die semantische Straßenkarte ist im Sinne der Anmeldung eine digitalisierte Straßenkarte mit semantischen Informationen bzgl. der durch die Straßenkarte dargestellten Objekte.

Gemäß der Erfindung umfasst das Vergleichen der charakteristischen Elemente:
Ermitteln von Deskriptoren für Schlüsselstellen jedes charakteristischen Elements der semantischen Straßenkarte und von Deskriptoren für Schlüsselstellen jedes charakteristischen Elements der Kartendarstellung; und Vergleichen der Deskriptoren der Schlüsselstellen der charakteristischen Elemente der semantischen Straßenkarte mit den Deskriptoren der Schlüsselstellen der charakteristischen Elemente der Kartendarstellung, wobei charakteristische Elemente übereinstimmen, falls die Deskriptoren der Schlüsselstellen jeweiligen Elemente übereinstimmen.

Hierdurch kann der technische Vorteil erreicht werden, dass durch die Deskriptoren der charakteristischen Elemente und das Vergleichen der Deskriptoren verschiedener charakteristischer Elemente ein präziser Vergleich zwischen verschiedenen charakteristischen Elementen der semantischen Straßenkarte und der Kartendarstellung ermöglicht ist.

Im Sinner der Anmeldung stimmen charakteristische Elemente in der Kartendarstellung mit charakteristischen Elementen in der semantischen Straßenkarte überein, wenn die charakteristischen Elemente in den jeweiligen Karten von der gleichen semantischen Klasse entstammen und in den jeweiligen Karten an vergleichbaren Stellen positioniert sind.

Gemäß der Erfindung umfasst das Bestimmen eines Deskriptors eines charakteristischen Elements:
Bestimmen einer geometrischen Gitterstruktur des Deskriptors an einer Position der Schlüsselstelle des jeweiligen charakteristischen Elements innerhalb der Kartendarstellung oder der semantischen Straßenkarte, wobei die geometrische Gitterstruktur eine Mehrzahl aneinander angrenzender Raumbereiche umfasst; Ermitteln für jeden Raumbereich der Gitterstruktur einer Eigenschaft des jeweiligen charakteristischen Elements;
Vergleichen von Werten der Eigenschaften innerhalb eines Raumbereichs mit Werten der Eigenschaft für unmittelbar an den Raumbereich angrenzende Raumbereiche der geometrischen Struktur; und
Zuordnen eines Zahlenwerts 1 einem Raumbereich der Gitterstruktur, falls der Wert der Eigenschaft im jeweiligen Raumbereich größer als Werte der Eigenschaft in unmittelbar angrenzenden Raumbereichen ist, und Zuordnen eines Zahlenwerts 0 einem Raumbereich, falls der Wert der Eigenschaft im Raumbereich nicht größer ist als Werte der Eigenschaft in den unmittelbar angrenzenden Raumbereichen.

Hierdurch kann der technische Vorteil erreicht werden, dass ein detaillierter und eindeutiger Deskriptor bereitgestellt werden kann. Der Deskriptor ist hierzu als ein Neighbor-Binary-Landmark-Deskriptor ausgebildet. Der derart ausbildete Deskriptor ermöglicht eine eindeutige Beschreibung verschiedener charakteristischer Elemente sowohl der Kartendarstellung als auch der semantischen Straßenkarte.

Alternativ kann auch ein Deskriptor ohne Nachbarschaftsvergleich verwendet werden, in dem kein Vergleich benachbarter Raumbereiche durchgeführt wird.

Nach einer Ausführungsform umfasst das Vergleichen der Deskriptoren: Ausführen einer Nächste-Nachbar-Suche der Deskriptoren auf einem k-dimensionalen Baum.

Hierdurch kann der technische Vorteil erreicht werden, dass ein präziser Vergleich verschiedener Deskriptoren der semantischen Straßenkarte und der Kartendarstellung ermöglicht ist.

Nach einer Ausführungsform werden Deskriptoren für charakteristische Elemente verschiedener semantischer Klassen bestimmt, wobei ausschließlich Deskriptoren von charakteristischen Elementen einer gleichen semantischen Klasse miteinander verglichen werden.

Hierdurch kann der technische Vorteil erreicht werden, dass der Vergleich der Deskriptoren verschiedener charakteristischer Elemente weiter präzisiert werden kann. Durch die Hinzunahme der semantischen Information bzgl. der charakteristischen Elemente kann eine weitere Präzisierung des Vergleichs der charakteristischen Elemente und damit verbunden der Positionierung der Kartendarstellung in der semantischen Straßenkarte erreicht werden.

Nach einer Ausführungsform umfassen die semantischen Klassen der charakteristischen Elemente: Fahrbahnmarkierungens Fahrbahnbergenzungen, Straßenlaternen, Ampelanlagen, Verkehrsschilder, .

Hierdurch kann der technische Vorteil erreicht werden, dass verschiedene im Umfeld eines Fahrzeugs üblich vorkommende Objekte zur Positionierung der Kartendarstellung in der semantischen Straßenkarte berücksichtigt werden können. Hierdurch kann die Positionierung weiter präzisiert werden. Die berücksichtigten Fahrbahnmarkierungen können durchgezogenen oder gestrichelte Linien in weißer oder gelber Farbe umfassen.

Nach einer Ausführungsform ist die Eigenschaft eine aus der folgenden Liste: eine Punktdichte von Punkten innerhalb des Raumbereichs, eine Länge eines als Linie dargestellten charakteristischen Elements innerhalb des Raumbereichs, ein Flächeninhalt eines als Fläche dargestellten charakteristischen Elements innerhalb des Raumbereichs, ein Volumen eines als Volumen dargestellten charakteristischen Elements innerhalb des Raumbereichs.

Hierdurch kann der technische Vorteil erreicht werden, dass in Abhängigkeit der geometrischen Eigenschaften der charakteristischen Elemente entsprechende Eigenschaften im Deskriptor berücksichtigt werden. Hierdurch können verschiedene geometrisch ausgebildete charakteristische Elemente durch den Deskriptor berücksichtigt werden, wodurch aufgrund der erhöhten Anzahl der für den Vergleich zur Verfügung stehenden charakteristischen Elemente die Positionierung der Kartendarstellung relativ zur semantischen Straßenkarte weiter präzisiert werden kann. Zur Berechnung der Deskriptoren, kann ein entsprechender ein charakteristisches Element umfassender Ausschnitt der Kartendarstellung oder der semantischen Straßenkarte um die jeweilige Schlüsselstelle, für die der Deskriptor zu berechnen ist, anhand der durchschnittlichen Richtungen der Fahrbahnmarkierung rotiert werden. Der Ausschnitt kann beispielsweise kreisförmig ausgebildet sein. Die Rotation kann durchgeführt werden, bis eine Deckung der Kartendarstellung mit der semantischen Straßenkarte erreicht wird. Durch die Rotation können somit Karten miteinander verglichen, die gegeneinander rotiert sind. Hierüber kann eine Rotationsinvarianz des Verfahrens erreicht werden.

Nach einer Ausführungsform umfasst das Ermitteln des Abschnitts:
Aufstellen einer Mehrzahl von Positionshypothesen möglicher Positionen der Kartendarstellung innerhalb der semantischen Straßenkarte, wobei das Aufstellen der Positionshypothesen umfasst:
Ausführen einer Positionstranslation der Schlüsselstellen der charakteristischen Elemente in der semantischen Straßenkarte, deren Deskriptoren mit Deskriptoren von charakteristischen Elementen der Kartendarstellung, innerhalb der semantischen Straßenkarte um Distanzen, die Distanzen in der Kartendarstellung der jeweils entsprechenden charakteristischen Elemente der Kartendarstellung zu einem Mittelpunkt der Kartendarstellung entsprechen;
Identifizieren von Positionen der Cluster als Positionshypothesen für die Kartendarstellung; und
Verifizieren der Positionshypothesen als Position des Abschnitts; wobei das Verifizieren umfasst:
   Ermitteln von Anzahlen von in Zentren der Cluster verschobenen Schlüsselstellen und Identifizieren des Clusters mit größter Anzahl von in das Zentrum des Clusters verschobenen Schlüsselstellen als Positionshypothese des Abschnitts mit einer größten Übereinstimmung mit der Kartendarstellung; oder
   Abbilden der Kartendarstellung in die semantische Straßenkarte gemäß den Positionshypothesen, Vergleichen der charakteristischen Elemente an der Position der Positionshypothese mit den charakteristischen Elementen der an die Position der Positionshypothese abgebildeten Kartendarstellung und Identifizieren der Positionshypothese mit einer größten Anzahl von übereinstimmenden charakteristischen Elementen.

Hierdurch kann der technische Vorteil erreicht werden, dass die Positionierung der Kartendarstellung relativ zur semantischen Straßenkarte mehrere Positionshypothesen aufgestellt werden können. Durch die Mehrzahl von Positionshypothesen kann die tatsächliche Positionierung der Kartendarstellung weiter präzisiert werden. So wird in einem Auswahlverfahren die Positionshypothese ausgewählt, die mit größter Wahrscheinlichkeit die korrekte Position der Kartendarstellung relativ zur semantischen Straßenkarte darstellt. Die ausgewählte Positionshypothese entspricht hierbei einem Abschnitt in der semantischen Straßenkarte, der die meisten charakteristischen Elemente aufweist, die mit den charakteristischen Elementen der Kartendarstellung übereinstimmen.

Im Sinne der Anmeldung stimmen Deskriptoren charakteristischer Elemente überein, wenn die Deskriptoren eine Ähnlichkeit aufweisen,

Nach einer Ausführungsform umfasst das Vergleichen der der charakteristischen Elemente an der Position der Positionshypothese mit den charakteristischen Elementen der an die Position der Positionshypothese abgebildeten Kartendarstellung eine Ausführung eines RANSAC-Algorithmus.

Hierdurch kann der technische Vorteil erreicht werden, dass ein präziser Vergleich der charakteristischen Elemente und eine präzise Bestimmung einer größten Übereinstimmung erreicht werden können, indem durch Ausführung des RANSAC-Algorithmus Ausreißerwerte der charakteristischen Elemente, insbesondere bezüglich ihrer Positionierung innerhalb der semantischen Straßenkarte, aussortiert und bei dem Vergleich unberücksichtigt bleiben können.

Nach einer Ausführungsform umfasst das Verfahren ferner:
Ausführen einer Vorpositionierung der Kartendarstellung relativ zur semantischen Straßenkarte basierend auf einer Geoposition des durch die Kartendarstellung dargestellten Umfelds des Fahrzeug; und
Ermitteln eines Teilabschnitts der semantischen Straßenkarte basierend auf der ermittelten Geoposition, wobei die charakteristischen Elemente der semantischen Straßenkarte innerhalb des Teilabschnitts bestimmt werden.

Hierdurch kann der technische Vorteil erreicht werden, dass eine Vereinfachung der Positionierung der Kartendarstellung relativ zur semantischen Straßenkarte ermöglicht ist. Über die Vorpositionierung basierend auf der Geoposition des durch die Umfeldsensordaten des Umfeldsensors des Fahrzeugs dargestellten Umfelds kann die semantische Straßenkarte für den Vergleich der charakteristischen Elemente auf einen Teilabschnitt reduziert werden, der die Geoposition des Umfelds des Fahrzeugs umfasst. Hierdurch kann der Vergleichsprozess der charakteristischen Elemente der Kartendarstellung und der charakteristischen Elemente der semantischen Straßenkarte vereinfacht werden, indem lediglich charakteristische Elemente der semantischen Straßenkarte berücksichtigt werden, die in dem um die Geoposition angeordneten Teilabschnitt angeordnet sind.

Nach einem zweiten Aspekt wird ein Verfahren zum Ergänzen einer semantischen Straßenkarte mit Information einer Kartendarstellung eines Umfelds eines Fahrzeugs bereitgestellt, umfassend:
Ausführen des Verfahrens zum Positionieren einer Kartendarstellung eines Umfelds eines Fahrzeugs in einer semantischen Straßenkarte nach einer der voranstehenden Ausführungsformen; und
Integrieren von Information der Kartendarstellung in den ermittelten Abschnitt der semantischen Straßenkarte.

Hierdurch kann der technische Vorteil erreicht werden, dass ein verbessertes Verfahren zum Ergänzen einer semantischen Straßenkarte mit Information einer Kartendarstellung eines Umfelds eines Fahrzeugs bereitgestellt, das das verbesserte Verfahren zum Positionieren einer Kartendarstellung eines Umfelds eines Fahrzeugs in einer semantischen Straßenkarte mit den oben genannten technischen Vorteilen umfasst.

Nach einem dritten Aspekt der Erfindung wird eine Recheneinheit bereitgestellt, die eingerichtet ist, das Verfahren zum Positionieren einer Kartendarstellung eines Umfelds eines Fahrzeugs in einer semantischen Straßenkarte nach einer der voranstehenden Ausführungsformen und/oder das Verfahren zum Ergänzen einer semantischen Straßenkarte mit Information einer Kartendarstellung eines Umfelds eines Fahrzeugs auszuführen.

Nach einem vierten Aspekt der Erfindung wird ein Computerprogrammprodukt umfassend Befehle bereitgestellt, die bei der Ausführung des Programms durch eine Datenverarbeitungseinheit diese veranlassen, das Verfahren zum Positionieren einer Kartendarstellung eines Umfelds eines Fahrzeugs in einer semantischen Straßenkarte nach einer der voranstehenden Ausführungsformen und/oder das Verfahren zum Ergänzen einer semantischen Straßenkarte mit Information einer Kartendarstellung eines Umfelds eines Fahrzeugs auszuführen.

Ausführungsbeispiele der Erfindung werden anhand der folgenden Zeichnungen erläutert. In den Zeichnungen zeigen:
- Fig. 1: eine schematische Darstellung eines Fahrzeugs mit einer Recheneinheit zur Ausführung des Verfahrens zum Positionieren einer Kartendarstellung eines Umfelds eines Fahrzeugs in einer semantischen Straßenkarte;
- Fig. 2: eine schematische Darstellung einer semantischen Straßenkarte und einer Kartendarstellung eines Umfelds eines Fahrzeugs;
- Fig. 3: eine schematische Darstellung eines Deskriptors;
- Fig. 4: eine schematische Darstellung eines auf eine semantischen Straßenkarte oder eine Kartendarstellung angewendeten Deskriptors;
- Fig. 5: ein Flussdiagramm eines Verfahrens zum Positionieren einer Kartendarstellung eines Umfelds eines Fahrzeugs in einer semantischen Straßenkarte;
- Fig. 6: ein Flussdiagramm eines Verfahrens zum Ergänzen einer semantischen Straßenkarte mit Information einer Kartendarstellung eines Umfelds eines Fahrzeugs; und
- Fig. 7: eine schematische Darstellung eines Computerprogrammprodukts.

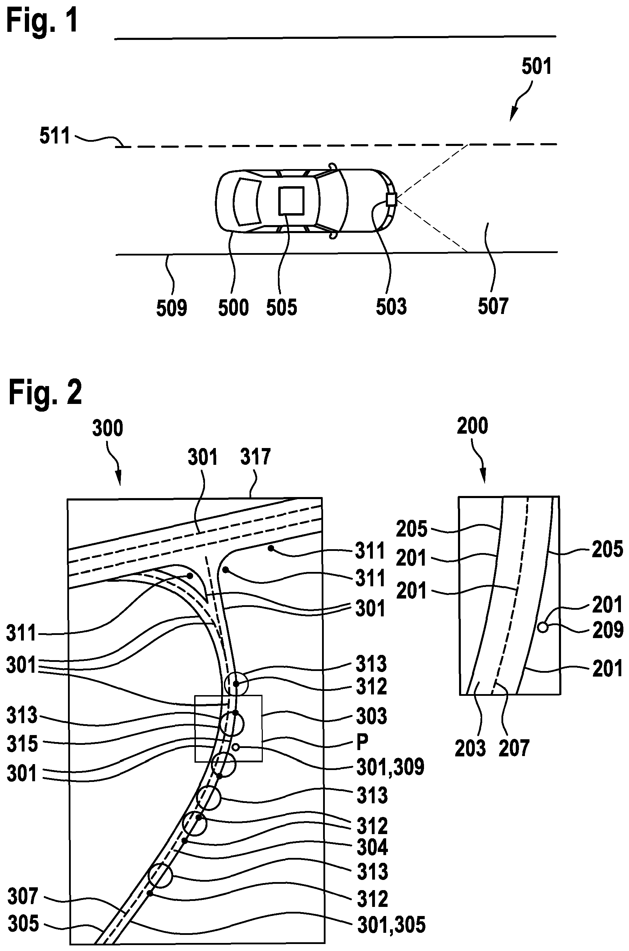

Fig. 1 zeigt eine schematische Darstellung eines Fahrzeugs 500 mit einer Recheneinheit 505 zur Ausführung des Verfahrens 100 zum Positionieren einer Kartendarstellung 200 eines Umfelds 501 eines Fahrzeugs 500 in einer semantischen Straßenkarte 300.

In Figur 1 ist ein Fahrzeug 500 auf einer Fahrbahn 507 mit Fahrbahnbegrenzungen 509 und Fahrbahnmarkierungen 511 dargestellt. Das Fahrzeug 500 umfasst wenigstens einen Umfeldsensor 503 und eine Recheneinheit 505. Über den Umfeldsensor 503 ist das Fahrzeug 500 in der Lage, Umfeldsensordaten des das Fahrzeug 500 umgebenden Umfelds 501 aufzunehmen. Die Recheneinheit 505 ist eingerichtet, das erfindungsgemäße Verfahren zum Positionieren einer Kartendarstellung eines Umfelds eines Fahrzeugs in einer semantischen Straßenkarte durchzuführen. Die Recheneinheit 505 kann ferner eingerichtet sein, das erfindungsgemäße Verfahren zum Ergänzen einer semantischen Straßenkarte mit Informationen einer Kartendarstellung eines Umfelds eines Fahrzeugs auszuführen. Hierzu kann die semantische Straßenkarte in der Recheneinheit 505, beispielsweise in einer entsprechenden Speichervorrichtung, gespeichert sein.

Fig. 2 zeigt eine schematische Darstellung einer semantischen Straßenkarte 300 und einer Kartendarstellung 200 eines Umfelds 501 eines Fahrzeugs 500.

Figur 2 zeigt eine Kartendarstellung 200 eines Umfelds eines Fahrzeugs, analog zu dem in Figur 1 gezeigten Fahrzeug 500. Die Kartendarstellung 200 basiert auf Umfeldsensordaten eines Umfeldsensors 503 eines Fahrzeugs 500, die während eines Fahrens des Fahrzeugs 500 vom jeweils das Fahrzeug 500 umgebenden Umfeld 501 aufgenommen wurden. In der gezeigten Ausführungsform erfasst die Kartendarstellung 200 eine Fahrbahn 203 mit Fahrbahnbegrenzungen 205 und Fahrbahnmarkierungen 207. Die Kartendarstellung 200 zeigt ferner eine Straßenlaterne 209, die am Rand der Fahrbahn 203 angeordnet ist.

Die Figur 2 zeigt ferner eine semantische Straßenkarte 300. Die semantische Straßenkarte zeigt ebenfalls eine Fahrbahn 304 mit einer Fahrbahnbegrenzung 305 und Fahrbahnmarkierungen 307. Die semantische Straßenkarte 300 zeigt einen im Vergleich zur Kartendarstellung 200 größeren Ausschnitt des Umfelds. Die semantische Straßenkarte zeigt damit eine Mehrzahl von verschiedenen Objekten, die entlang der Fahrbahn 304 angeordnet sind, beispielsweise Straßenlaternen 309 oder Ampelanlagen 311.

Zum Positionieren der Kartendarstellung 200 in der semantischen Straßenkarte 300 gemäß dem erfindungsgemäßen Verfahren werden zunächst in der Kartendarstellung 200 charakteristische Elemente 201 bestimmt. Die charakteristischen Elemente 201 können beispielsweise durch die Fahrbahnbegrenzungen 205, die Fahrbahnmarkierung 207 oder die Straßenlaterne 209 gegeben sein. Ferner werden in der semantischen Straßenkarte 300 entsprechende charakteristische Elemente 301 bestimmt. Die charakteristischen Elemente 301 können ebenfalls durch die Fahrbahnbegrenzung 305, die Fahrbahnmarkierung 307, die Straßenlaternen 309 oder die Ampelanlagen 311 gegeben sein.

Die ermittelten charakteristischen Elemente 201 der Kartendarstellung 200 werden darauffolgend mit den ermittelten charakteristischen Elementen 301 der semantischen Straßenkarte verglichen. Durch den Vergleich der charakteristischen Elemente 201 der Kartendarstellung 200 mit den charakteristischen Elementen 301 der semantischen Straßenkarte 300 wird in der semantischen Straßenkarte 300 ein Abschnitt 303 ermittelt. Der ermittelte Abschnitt 303 ist dadurch gekennzeichnet, dass die im ermittelten Abschnitt 303 angeordneten charakteristischen Elemente 301 wenigstens teilweise mit den charakteristischen Elemente 201 der Kartendarstellung 200 übereinstimmen. Der derart ermittelte Abschnitt 303 umfasst somit wenigstens ein charakteristisches Elemente 301, das mit einem charakteristischen Elemente 201 der Kartendarstellung 200 übereinstimmt. Eine Übereinstimmung von charakteristischen Elementen kann hierbei darüber gegeben sein, dass die jeweiligen charakteristischen Elemente von gleicher semantischer Klasse sind und innerhalb der Kartendarstellung 200 und der semantischen Straßenkarte 300 an einer vergleichbaren Positionen angeordnet ist.

Zur Bestimmung der Position der Kartendarstellung 200 in der semantischen Straßenkarte 300 wird darauffolgend eine Position P des Abschnitts 303 in der semantischen Straßenkarte 300 als Positionierung der Kartendarstellung 200 in der semantischen Straßenkarte 300 identifiziert. Die derart ermittelte Position P der Kartendarstellung 200 in der semantischen Straßenkarte 300 ist damit zu interpretieren, dass der durch den Vergleich der charakteristischen Elemente 201, 203 ermittelte Abschnitt 303 das durch die Kartendarstellung 200 dargestellte Umfeld 501 des Fahrzeugs 500 abbildet.

Zum Vergleichen der charakteristischen Elemente 201 der Kartendarstellung 200 mit den charakteristischen Elementen 301 der semantischen Straßenkarte 300 können für Schlüsselstellen jedes charakteristischen Elements 301 der semantischen Straßenkarte 300 und für Schlüsselstellen jedes charakteristischen Elements 201 der Kartendarstellung 200 Deskriptoren ermittelt und miteinander verglichen werden. Die Deskriptoren können hierzu als Neighbor-Binary-Landmark-Deskriptoren ausgebildet sein. Hierzu wird für jede Schlüsselstelle eine Gitterstruktur mit mehreren Raumbereichen ermittelt und für jeden Raumbereich der Gitterstruktur ein Wert einer Eigenschaft des jeweils berücksichtigten charakteristischen Elements ermittelt. Zur Erstellung des Deskriptors werden für die Mehrzahl von Raumbereichen in der Gitterstruktur die jeweils ermittelten Werte der Eigenschaft miteinander verglichen und einem Raumbereich der Gitterstruktur, in dem die Eigenschaft des jeweils charakteristischen Elements einen größeren Wert aufweist als in den direkt angrenzenden Raumbereichen wird ein Zahlenwert 1 zugeordnet, während den sonstigen Raumbereichen entsprechend ein Zahlenwert 0 zugeordnet wird. Die daraus entstehenden Vektoren können für beliebige charakteristische Elemente der Kartendarstellung 200 bzw. der semantischen Straßenkarte 300 miteinander verglichen werden.

Zum Vergleich kann insbesondere eine Mittelung von die Deskriptoren für charakteristische Elemente einer semantischen Klasse durchgeführt werden. Die Mittelung kann beispielsweise mittels einer Bildung eines gewichteten Mittelwerts der für eine Mehrzahl von Deskriptoren der Mehrzahl von charakteristischen Elemente einer semantischen Klasse bewirkt werden.

Zum Vergleichen der verschiedenen Deskriptoren kann eine nächste Nachbarsuche der Deskriptoren auf einem k-Dimensionalen Baum ausgeführt werden.

Zum Vergleichen der Deskriptoren der verschiedenen charakteristischen Elemente 201, 301 können die charakteristischen Elemente 201, 301 bzgl. ihrer semantischen Klasse berücksichtigt werden, so dass ausschließlich Deskriptoren von charakteristischen Elemente 201, 301 der Deskriptoren verglichen werden, deren charakteristische Elemente der gleichen semantischen Klassen zugeordnet sind. Alternativ kann wie oben beschrieben für die Mehrzahl charakteristischer Elemente einer semantischen Klasse ein gemittelter Deskriptor verwendet werden, sodass für jedes Element der gleichen Klasse der gleiche gemittelte Deskriptor verwendet wird. Die semantische Klasse kann hierbei durch die oben beschriebenen Objekte wie beispielsweise die Fahrbahnbegrenzung 305, die Fahrbahnmarkierung 307, die Straßenlaternen 309 oder die Ampelanlangen 311 gegeben sein. Schlüsselstellen, für die die Berechnung der Deskriptoren durchgeführt werden, können jeder Punkt eines charakteristischen Elements innerhalb der Kartendarstellung 200 bzw. der semantischen Straßenkarte 300 sein.

Zum Vergleichen der charakteristischen Elemente 201, 301 bzw. der jeweiligen Deskriptoren kann eine Rotation der Kartendarstellung 200 relativ zur semantischen Straßenkarte 300 vorgenommen werden. Durch die Rotation können die Kartendarstellung und die semantische Straßenkarte 300 in eine identische Ausrichtung gebracht werden, so dass ein präziser Vergleich der Deskriptoren der Schlüsselstellen der zu vergleichen charakteristischen Elemente 201, 301 und damit verbunden eine präzise Positionierung der Kartendarstellung 200 innerhalb der semantischen Straßenkarte 300 erfolgen.

Die Rotation der Kartendarstellung 200 relativ zur semantischen Straßenkarte 300 kann anhand einer Hauptachse bzw. einer durchschnittlichen Linienrichtung der Kartendarstellung 200 und der semantischen Straßenkarte 300 um ein Zentrum eines Clusters 312 einer entsprechenden Positionshypothese 313 durchgeführt werden.

Aufgrund der hohen Periodizität von Straßenverläufen in Bezug auf die Straßenbegrenzungen bzw. Straßenmarkierungen oder die Anordnung von Straßenbeleuchtungsmasten oder Ampelanlagen kann in Abhängigkeit des durch die Kartendarstellung 200 dargestellten Straßenabschnitts eine erhöhte Anzahl von möglichen Positionen des durch die Kartendarstellung 200 dargestellten Straßenabschnitts innerhalb der semantischen Straßenkarte 300 existieren. Hierdurch kann eine Mehrzahl möglicher Positionshypothesen aufgestellt werden, die in Abhängigkeit der charakteristischen Elemente 201 der Kartendarstellung 200 mit unterschiedlicher Wahrscheinlichkeit die korrekte Position des durch die Kartendarstellung 200 dargestellten Straßenabschnitts innerhalb der semantischen Straßenkarte 300 darstellen.

Zur Bestimmung der Position der Kartendarstellung 200 in der semantischen Straßenkarte 300 mehrere Positionshypothesen erstellt werden. Hierzu kann für die charakteristischen Elemente 301 der semantischen Straßenkarte 300, für die eine Übereinstimmung der Deskriptoren mit Deskriptoren von charakteristischen Elemente 201 der Kartendarstellung 200 ermittelt wurden, eine Positionsverschiebung der Schlüsselstellen um eine Verschiebungsdistanz vorgenommen werden, die einer Distanz der jeweiligen Schlüsselstellen der charakteristischen Elemente 201 der Kartendarstellung 200 zu einem Mittelpunkt der Kartendarstellung 200 entsprechen. Die hierdurch gebildeten Cluster 312 von verschobenen Schlüsselstellen innerhalb der semantischen Straßenkarte 300 können im Folgenden als Positionshypothese 313 interpretiert werden. Hierzu kann eine geometrische Verifikation der Positionshypothesen durch Ausführen eines RANSAC-Algorithmus erfolgen. Zur Bestimmung der tatsächlichen Position der Kartendarstellung 200 innerhalb der semantischen Straßenkarte 300 basierend auf den erstellten Positionshypothesen 313 wird basierend auf einer Punktdichte der einzelnen Cluster 312 von verschobenen Schlüsselstellen die Positionshypothese 315 ermittelt, die auf einem Punktcluster 312 mit der höchsten Punktdichte basiert. Die Punktdichte des jeweiligen Clusters 312 entspricht hierbei der Anzahl von verschobenen Schlüsselstellen der charakteristischen Elemente 301, die jeweils mit charakteristischen Elementen 201 der Kartendarstellung 200 übereinstimmen. Das Punktcluster 312 mit der höchsten Punktdichte und die darauf basierende Positionshypothese 315 entspricht damit dem Abschnitt 303 innerhalb der semantischen Straßenkarte, in dem die größte Anzahl von charakteristischen Elementen 301 angeordnet ist, die mit charakteristischen Elementen 201 der Kartendarstellung 200 übereinstimmt. Die derart ermittelte Positionshypothese 315 stellt damit die mit größter Wahrscheinlichkeit korrekte Position der Kartendarstellung innerhalb der semantischen Straßenkarte 300 dar.

Alternativ kann die tatsächliche Position der Kartendarstellung 200 innerhalb der semantischen Straßenkarte 300 basierend auf der Mehrzahl von Positionshypothesen 313 ermittelt werden, indem für jede Positionshypothese eine Transformation der Kartendarstellung 200 in die semantische Straßenkarte 300 vorgenommen wird und eine Überprüfung der Übereinstimmung der derart transformierten Kartendarstellung 200 mit dem jeweiligen Abschnitt 303 der Positionshypothese 313 der semantischen Straßenkarte 300 vorgenommen wird.

Zur Positionsbestimmung der Kartendarstellung 200 innerhalb der semantischen Straßenkarte 300 können alle charakteristischen Elemente 201 der Kartendarstellung 200 und alle charakteristischen Elemente 301 der semantischen Straßenkarte berücksichtigt werden. Zum Eingrenzen der Anzahl der in der semantischen Straßenkarte 300 zu berücksichtigenden charakteristischen Elemente 301 kann eine Vorpositionierung der Kartendarstellung 200 innerhalb der semantischen Straßenkarte 300 vorgenommen werden. Hierzu kann basierend auf einer Geoposition des durch die Umfeldsensordaten des Fahrzeugs 500 dargestellten und in der Kartendarstellung 300 beschriebenen Umfelds 501 ein Teilabschnitt 317 der semantischen Straßenkarte 300 ermittelt werden, der die Geoposition des Umfelds 501 umfasst. Die Geoposition kann beispielsweise basierend auf Daten eines globalen Navigationssatellitensystems GNSS bestimmt werden, die die Geoposition des Fahrzeugs 501 zu einem Zeitpunkt anzeigen, zu dem die Umfeldsensordaten, auf deren Basis die Kartendarstellung 200 generiert ist, empfangen wurden. Durch Berücksichtigung der Geoposition kann die Position der Kartendarstellung 200 innerhalb der semantischen Straßenkarte 300 auf eine Genauigkeit von ca. 50 Meter vorpositioniert werden. Für die exakte Bestimmung der Position der Kartendarstellung 200 innerhalb der Straßenkarte 300 durch Vergleichen der charakteristischen Elemente 201, 301 werden für die semantische Straßenkarte 300 somit ausschließlich die charakteristischen Elemente 301 berücksichtigt, die innerhalb des durch die Vorpositionierung bestimmten Teilabschnitts 317 der semantischen Straßenkarte 300 angeordnet sind.

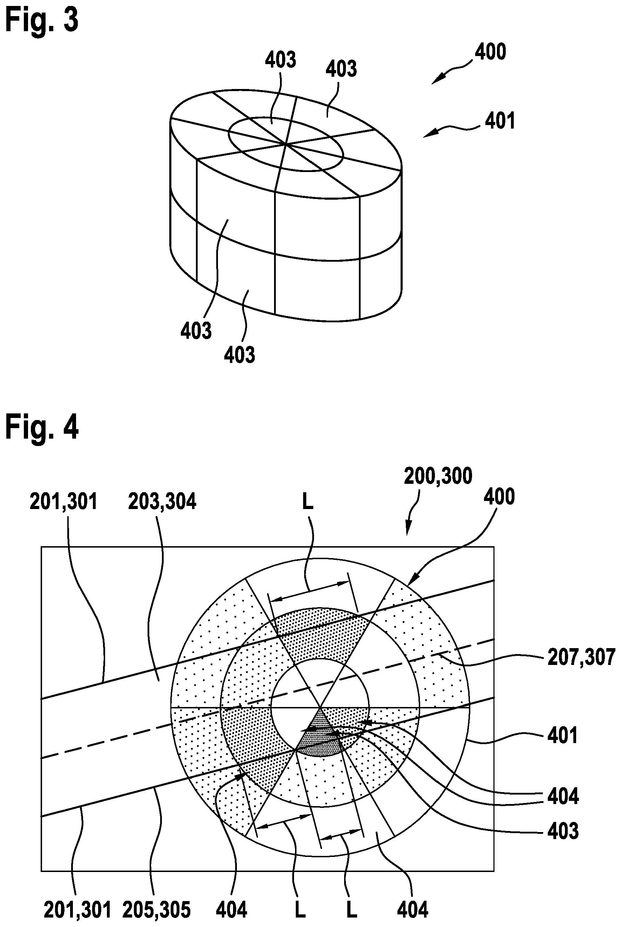

Fig. 3 zeigt eine schematische Darstellung eines Deskriptors 400.

Der gezeigte Deskriptor 400 ist als ein Neighbor-Binary-Landmark-Deskriptor ausgebildet und umfasst eine Gitterstruktur 401 mit einer Mehrzahl von Raumbereichen 403. Die Gitterstruktur 401 ist in der gezeigten Ausführungsform zylinderförmig mit einer kreisrunden Basisfläche ausgebildet. Die Raumbereiche 403 sind radialer und azimutaler Richtung wie auch in Längsrichtung der zylindrischen Gitterstruktur 401 angeordnet. Durch die dreidimensionale Ausbildung des Deskriptors 400 ist eine dreidimensionale Berücksichtigung der charakteristischen Elemente 201, 301 der dreidimensionalen Kartendarstellung 200 bzw. der dreidimensionalen semantischen Straßenkarte 300 ermöglicht.

Fig. 4 zeigt eine schematische Darstellung eines auf eine semantischen Straßenkarte 300 oder eine Kartendarstellung 200 angewendeten Deskriptors 400.

In der gezeigten Draufsicht ist ein Deskriptor 400 gemäß der Ausführungsform in Figur 3 dargestellt, der über einer Fahrbahn 203, 304 mit entsprechenden Fahrbahnbegrenzungen 205, 305 und Fahrbahnmarkierungen 207, 307 positioniert ist. Zur Berechnung des Deskriptors 400 werden für jeden Raumbereich 403 der Gitterstruktur 401 Werte einer Eigenschaft der berücksichtigten charakteristischen Elemente 201, 301 berechnet. In der gezeigten Ausführungsform werden als charakteristische Elemente 201, 301 die Fahrbahnbegrenzung 205, 305 und die Fahrbahnmarkierungen 207, 307 berücksichtigt. Da diese charakteristischen Elemente 201, 301 jeweils eine Linienform aufweisen, wird als Eigenschaft des jeweils zu berücksichtigenden charakteristischen Elements 201, 301 eine Länge L, die das jeweilige charakteristische Element 201, 301 in dem jeweilig zu betrachtenden Raumbereich 403, 404 annimmt, berücksichtigt.

Wie oben angeführt, können die Deskriptoren separat für verschiedene semantische Klassen der charakteristischen Elemente 201, 301 berechnet werden. So kann in dem gezeigten Fall der Deskriptor 400 ausschließlich für die Straßenmarkierungen 207, 307 bzw. ausschließlich für die Fahrbahnbegrenzung 205, 305 berechnet werden. Die Berücksichtigung der semantischen Klassen der charakteristischen Elemente 201, 301 in der Berechnung des Deskriptors 400 ist durch die unterschiedliche Schraffur der verschiedenen Raumbereich 403, 404 dargestellt. Zur Berechnung des Deskriptors 400 werden die Raumbereiche 403, 404 und insbesondere die darin angenommenen Werte der Eigenschaften der berücksichtigten charakteristischen Elemente 201, 301 untereinander verglichen. Der Raumbereich 404, der einen Wert der berücksichtigten Eigenschaft des charakteristischen Elements 201, 301 aufweist, der größer ist, als die Werte der Raumbereich 403, die unmittelbar an den jeweiligen Raumbereich 404 angrenzen, wird mit einem Zahlenwert 1 versehen. Die jeweils anderen Raumbereiche 403, die Werte der Eigenschaften der charakteristischen Elemente 201, 301 aufweisen, die nicht größer sind als die Werte der jeweils unmittelbar angrenzenden Raumbereiche 403, werden hingegen mit einem Zahlenwert von 0 versehen. Der derart bestimmte Deskriptor 400 kann somit in einer binären Vektordarstellung dargestellt werden.

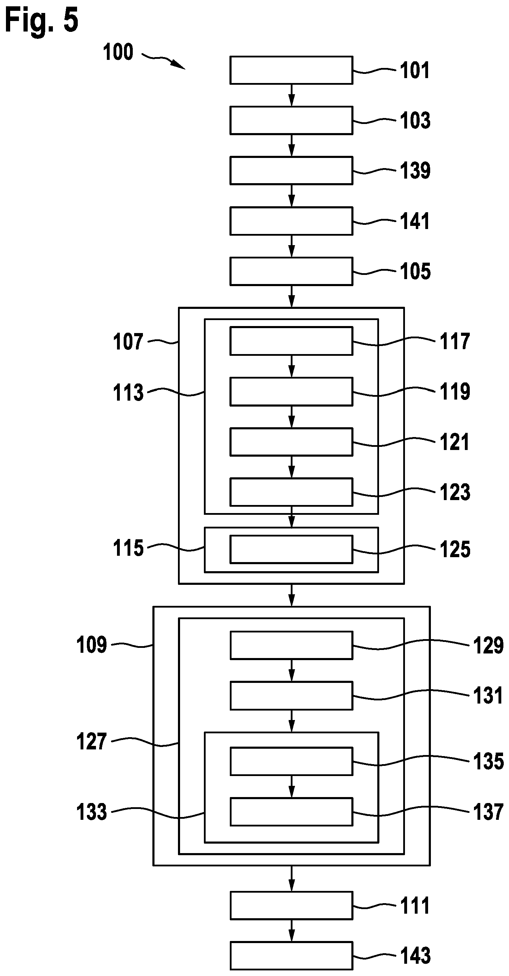

Fig. 5 zeigt ein Flussdiagramm eines Verfahrens 100 zum Positionieren einer Kartendarstellung 200 eines Umfelds 501 eines Fahrzeugs 500 in einer semantischen Straßenkarte 300.

Zum Positionieren der Kartendarstellung 200 des Umfelds 501 des Fahrzeugs 500 in der semantischen Straßenkarte 300 werden in einem Verfahrensschritt 101 zunächst Umfeldsensordaten wenigstens eines Umfeldsensors 503 des Fahrzeugs 500 aufgenommen. Die Umfeldsensordaten bilden hierbei das Umfeld 501 des Fahrzeugs 500 ab. Die Umfeldsensordaten können beispielsweise Kameradaten, Lidar-Daten oder Radar-Daten umfassen.

In einem weiteren Verfahrensschritt 103 wird basierend auf den empfangenen Umfeldsensordaten eine Kartendarstellung 200 des Umfelds 501 des Fahrzeugs 500 erstellt. Die Kartendarstellung 200 kann hierbei als eine digitale dreidimensionale Karte des Umfelds 501 des Fahrzeugs 500 ausgebildet sein und das Umfeld 501 des Fahrzeugs 500 in einem Reichweitenbereich des wenigstens einen Umfeldsensors 503 abbilden.

In einem weiteren Verfahrensschritt 139 wird eine Vorpositionierung der Kartendarstellung 200 relativ zur semantischen Straßenkarte 300 vorgenommen. Die Vorpositionierung wird hierbei basierend auf einer Geoposition des durch die Kartendarstellung 200 dargestellten Umfelds 501 des Fahrzeugs 500 vorgenommen. Die Geoposition kann auf Daten eines globalen Navigationssatellitensystems GNSS basieren, die zu einem Zeitpunkt empfangen wurden, zu dem die Umfeldsensordaten, auf denen Kartendarstellung 200 basiert, empfangen wurden.

In einem weiteren Verfahrensschritt 141 wird basierend auf der Vorpositionierung der Kartendarstellung 200 in der semantischen Straßenkarte 300 ein Teilabschnitt 317 ermittelt. Der Teilabschnitt 317 umfasst die Geoposition der Kartendarstellung 200.

In einem weiteren Verfahrensschritt 105 werden in der Kartendarstellung 200 und in der semantischen Straßenkarte 300 jeweils charakteristische Elemente 201, 301 ermittelt. Die charakteristischen Elemente 201, 301 können durch Objekte innerhalb des Umfelds 501 gegeben sein, die innerhalb der Kartendarstellung 200 bzw. der semantischen Straßenkarte 300 abgebildet sind. Die charakteristischen Elemente 201, 301 können beispielsweise durch Fahrbahnbegrenzungen 205, 305, Fahrbahnmarkierungen 207, 307, Straßenlaternen 209, 309 oder Ampelanlagen 311 gegeben sein.

In einem weiteren Verfahrensschritt 107 werden die charakteristischen Elemente 201 der Kartendarstellung 200 mit den charakteristischen Elementen 301 der semantischen Straßenkarte 300 verglichen.

Hierzu werden in einem weiteren Verfahrensschritt 113 für Stützstellen jedes charakteristischen Elements 201 der Kartendarstellung 200 und für Stützstellen jedes charakteristischen Elements 301 innerhalb des Teilabschnitts 317 der semantischen Straßenkarte 300 Deskriptoren 400 ermittelt.

Hierzu wird für jede Stützstelle in einem Verfahrensschritt 117 eine Gitterstruktur 401 mit einer Mehrzahl von Raumbereichen 403 ermittelt.

In einem weiteren Verfahrensschritt 119 wird für jeden Raumbereich 403 der Gitterstruktur 401 ein Wert einer Eigenschaft des jeweils betrachteten charakteristischen Elements 201, 301 ermittelt. Die Eigenschaft der berücksichtigten charakteristischen Elemente 201, 301 kann beispielsweise eine Punktdichte eines punkförmigen charakteristischen Elements 201, 301, eine Länge eines linienförmigen charakteristischen Elements 201, 301, ein Flächeninhalt eines flächenförmigen charakteristischen Elements oder ein Volumen eines dreidimensionalen charakteristischen Elements 201, 301 sein.

In einem weiteren Verfahrensschritt 121 werden die Werte der Eigenschaften der charakteristischen Elemente 201, 301 der einzelnen Raumbereiche 403 der Gitterstruktur 401 des Deskriptors 400 mit Werten verglichen, die die jeweilige Eigenschaft in unmittelbar angrenzenden Raumbereichen 403 der Gitterstruktur 401 des Deskriptors 400 annehmen.

Darauf basierend wird in einem weiteren Verfahrensschritt 123 jedem Raumbereich 403, 404, in dem die jeweils betrachtete Eigenschaft einen Wert annimmt, der größer ist, als ein Wert der Eigenschaft in unmittelbar angrenzenden Raumbereichen 403, 404, ein Zahlenwert von 1 zugeordnet, während einem Raumbereich 403, 404, in dem die Eigenschaft einen Wert aufweist, der nicht größer ist, als die Werte der Eigenschaft in unmittelbar angrenzenden Raumbereichen, ein Zahlenwert von 0 zugeordnet wird. Der Deskriptor 400 kann somit in einer binären Vektordarstellung dargestellt werden.

In einem weiteren Verfahrensschritt 115 werden die derart ermittelten Deskriptoren 400 der verschiedenen charakteristischen Elemente 201, 203 miteinander verglichen. Der Vergleich der Deskriptoren 400 der verschiedenen charakteristischen Elemente 201, 301 kann hierbei derart ausgeführt werden, dass ausschließlich Deskriptoren von charakteristischen Elementen 201, 301 verglichen werden, die der gleichen semantischen Klasse zugeordnet sind. Somit können beispielsweise ausschließlich Deskriptoren 400 von Fahrbahnbegrenzungen 205, 305 miteinander verglichen werden. Wie oben beschrieben kann pro semantischer Klasse für alle charakteristischen Elemente der semantischen Klasse ein gemeinsamer gemittelter Deskriptor verwendet werden.

Zum Vergleichen der Deskriptoren 400 der Mehrzahl von charakteristischen Elementen 201, 301 wird in einem weiteren Verfahrensschritt 125 eine nächste Nachbarsuche von Deskriptoren 400 auf einem k-dimensionalen Baum durchgeführt.

In einem weiteren Verfahrensschritt 109 wird ein Abschnitt 303 innerhalb des Teilabschnitts 317 der semantischen Straßenkarte 300 ermittelt, in Abschnitt 303 ist wenigstens ein charakteristisches Element 301 angeordnet, das mit wenigstens einem charakteristischen Element 201 der Kartendarstellung 200 übereinstimmt.

Zum Bestimmen des Abschnitts 303 werden in einem weiteren Verfahrensschritt 127 Positionshypothesen 313 als mögliche Positionen der Kartendarstellung 200 innerhalb der semantischen Straßenkarte 300 aufgestellt.

Hierzu werden in einem Verfahrensschritt 129 Schlüsselstellen der charakteristischen Elemente 301 der semantischen Straßenkarte 300, deren Deskriptoren 400 mit Deskriptoren 400 von charakteristischen Elementen 201 der Kartendarstellung 200 übereinstimmen, innerhalb der semantischen Straßenkarte 300 um Distanzen verschoben, die Distanzen entsprechen, die die jeweiligen charakteristischen Elemente 201 der Kartendarstellung 200 von einem Zentrum der Kartendarstellung entfernt sind. Durch die Verschiebung der Schlüsselstellen der charakteristischen Elemente 301 der semantischen Straßenkarte 300 wird innerhalb des Teilabschnitts 317 der semantischen Straßenkarte 300 Cluster 312 von Stützstellen der charakteristischen Elemente 301 gebildet.

In einem weiteren Verfahrensschritt 131 werden die derart gebildeten Cluster 312 als Positionshypothesen 313 für die Kartendarstellung 200 innerhalb der semantischen Straßenkarte 300 identifiziert.

In einem weiteren Verfahrensschritt 133 werden Cluster 312 von verschobenen Schlüsselstellen mit einer höchsten Punktdichte von Schlüsselstellen innerhalb des Clusters 312 ermittelt und das jeweilige Cluster 312 als Positionshypothese 313 mit der größten Wahrscheinlichkeit der tatsächlichen Position der Kartendarstellung 200 innerhalb der semantischen Straßenkarte 300 identifiziert.

In einem weiteren Verfahrensschritt 135 werden die Positionshypothesen 313 durch Ausführen eines RANSAC-Algorithmus geometrisch verifiziert.

In einem weiteren Verfahrensschritt 137 wird die Positionshypothese 315 mit den meisten Inlier-Werten als die Position P der Kartendarstellung 200 identifiziert die Inlier-Werte der Positionshypothese 315 entsprechen hierbei der Anzahl von charakteristischen Elementen 301 innerhalb des durch die Positionshypothese 315 definierten Abschnitts 303, die den charakteristischen Elemente 201 der Kartendarstellung 200 entsprechen.

Hierauf folgend wird in einem weiteren Verfahrensschritt 111 die Position P des Abschnitts 303 innerhalb der semantischen Straßenkarte 300, der durch die Positionshypothese 315 mit den meisten Übereinstimmungen der charakteristischen Elemente 301 entspricht, als Position der Kartendarstellung 200 innerhalb der semantischen Straßenkarte 300 identifiziert.

In einem weiteren Verfahrensschritt 143 werden ferner Merkmalsassoziationen zwischen Merkmalen von charakteristischen Elementen 301 der semantischen Straßenkarte 300 und Merkmalen von mit den jeweils charakteristischen Elementen 301 der semantischen Straßenkarte 300 übereinstimmenden charakteristischen Elementen 201 der Kartendarstellung 200 gebildet.

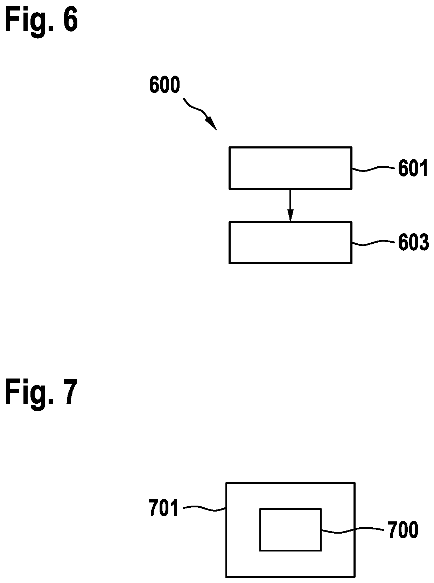

Fig. 6 zeigt ein Flussdiagramm eines Verfahrens 600 zum Ergänzen einer semantischen Straßenkarte 300 mit Information einer Kartendarstellung 200 eines Umfelds 501 eines Fahrzeugs 500.

Zum Ergänzen einer semantischen Straßenkarte 300 mit Informationen einer Kartendarstellung 200 eines Umfelds 501 eines Fahrzeugs 500 wird zunächst in einem Verfahrensschritt 601 das erfindungsgemäße Verfahren 100 zum Positionieren einer Kartendarstellung 200 eines Umfelds 501 eines Fahrzeugs 500 in einer semantischen Straßenkarte 300 gemäß den oben beschriebenen Ausführungsformen ausgeführt.

Darauffolgend wird in einem Verfahrensschritt 603 die Information der Kartendarstellung 200 in den ermittelten Abschnitt 303 der semantischen Straßenkarte 300 integriert.

FIG 7 zeigt eine schematische Darstellung eines Computerprogrammprodukts 700, umfassend Befehle, die bei der Ausführung des Programms durch eine Recheneinheit dieses veranlassen, das Verfahren 100 zum Positionieren einer Kartendarstellung 200 eines Umfelds 501 eines Fahrzeugs 500 in einer semantischen Straßenkarte 300 und/oder das Verfahren 600 zum Ergänzen einer semantischen Straßenkarte 300 mit Information einer Kartendarstellung 200 eines Umfelds 501 eines Fahrzeugs 500 auszuführen.

Das Computerprogrammprodukt 700 ist in der gezeigten Ausführungsform auf einem Speichermedium 701 gespeichert. Das Speichermedium 701 kann hierbei ein beliebiges aus dem Stand der Technik bekanntes Speichermedium sein.

## Patentansprüche

1. Verfahren (100) zum Positionieren einer Kartendarstellung (200) eines Umfelds (501) eines Fahrzeugs (500) in einer semantischen Straßenkarte (300), umfassend:
- Empfangen (101) von Umfeldsensordaten (505) wenigstens eines Umfeldsensors (503) eines Fahrzeugs (500);
- Erstellen (103) einer Kartendarstellung (200) eines Umfelds (501) des Fahrzeugs (500) basierend auf den Umfeldsensordaten (505) des Fahrzeugs (500);
- Ermitteln (105) von charakteristischen Elementen (201) in der Kartendarstellung (200) und von charakteristischen Elementen (301) in einer das Umfeld (501) abbildenden semantischen Straßenkarte (300);
- Vergleichen (107) der charakteristischen Elemente (201) der Kartendarstellung (200) mit den charakteristischen Elementen (301) der semantischen Straßenkarte (300), wobei das Vergleichen (107) der charakteristischen Elemente (201, 301) umfasst:
- Ermitteln (113) von Deskriptoren (400) für Schlüsselstellen jedes charakteristischen Elements (301) der semantischen Straßenkarte (300) und von Deskriptoren (400) für Schlüsselstellen jedes charakteristischen Elements (201) der Kartendarstellung (200),
- wobei eine Schlüsselstelle eines charakteristischen Elements (201) durch einen Punkt des charakteristischen Elements (201) innerhalb der Kartendarstellung (200) oder innerhalb der semantischen Straßenkarte (300) gegeben ist,
wobei das Ermitteln (113) der Deskriptoren (400) der Schlüsselstellen der charakteristischen Elemente (201, 301) umfasst:
- Bestimmen (117) einer geometrischen Gitterstruktur (401) des Deskriptors (400) an einer Position der Schlüsselstelle des jeweiligen charakteristischen Elements (201, 301) innerhalb der Kartendarstellung (200) oder der semantischen Straßenkarte (300), wobei die geometrische Gitterstruktur (401) eine Mehrzahl aneinander angrenzender Raumbereiche (403) umfasst;
- Ermitteln (119) für jeden Raumbereich (403) der Gitterstruktur (401) einer Eigenschaft des jeweiligen charakteristischen Elements (201, 301);
- Vergleichen (121) von Werten der Eigenschaften innerhalb eines Raumbereichs (403) mit Werten der Eigenschaft für unmittelbar an den Raumbereich (403) angrenzende Raumbereiche (404) der geometrischen Struktur (401); und
- Zuordnen (123) eines Zahlenwerts 1 einem Raumbereich (403) der Gitterstruktur (401), falls der Wert der Eigenschaft im jeweiligen Raumbereich (403) größer als Werte der Eigenschaft in unmittelbar angrenzenden Raumbereichen (404) ist, und Zuordnen eines Zahlenwerts 0 einem Raumbereich (403), falls der Wert der Eigenschaft im Raumbereich (403) nicht größer ist als Werte der Eigenschaft in den unmittelbar angrenzenden Raumbereichen (404);
und
- Vergleichen (115) der Deskriptoren (400) der Schlüsselstellen der charakteristischen Elemente (301) der semantischen Straßenkarte (300) mit den Deskriptoren (400) der Schlüsselstellen der charakteristischen Elemente (201) der Kartendarstellung (200), wobei charakteristische Elemente (201, 301) übereinstimmen, falls die Deskriptoren (400) der Schlüsselstellen der jeweiligen Elemente (201, 301) übereinstimmen;
- Ermitteln (109) eines Abschnitts (303) der semantischen Straßenkarte (300), für den wenigstens ein charakteristisches Element (301) des Abschnitts (303) der semantischen Straßenkarte (300) mit wenigstens einem charakteristischen Element (201) der Kartendarstellung (200) übereinstimmt, und für den die Kartendarstellung (200) und die semantische Straßenkarte (300) einen identischen Bereich des Umfelds (501) des Fahrzeugs (500) beschreiben; und
- Identifizieren (111) einer Position (P) des Abschnitts (303) innerhalb der semantischen Straßenkarte (300) als Position der Kartendarstellung (200) in der semantischen Straßenkarte (300).

2. Verfahren (100) nach Anspruch 1, wobei das Vergleichen (121) der Deskriptoren (400) umfasst:
- Ausführen (125) einer Nächste-Nachbar-Suche der Deskriptoren (400) auf einem k-dimensionalen Baum.

3. Verfahren (100) nach einem der voranstehenden Ansprüche, wobei Deskriptoren (400) für charakteristische Elemente (201, 301) verschiedener semantischer Klassen bestimmt werden, und wobei ausschließlich Deskriptoren (400) von charakteristischen Elementen (201, 301) einer gleichen semantischen Klasse miteinander verglichen werden.

4. Verfahren (100) nach Anspruch 3, wobei die semantischen Klassen der charakteristischen Elemente (201, 301) umfassen: Fahrbahnmarkierungen (207, 307), Fahrbahnbergenzungen (205, 305), Straßenlaternen (209, 309), Ampelanlagen (311), Verkehrsschilder.

5. Verfahren (100) nach einem der voranstehenden Ansprüche, wobei die Eigenschaft eine aus der folgenden Liste ist: eine Punktdichte von Punkten innerhalb des Raumbereichs (403, 404), eine Länge (L) eines als Linie dargestellten charakteristischen Elements (201, 301) innerhalb des Raumbereichs (403, 404), ein Flächeninhalt eines als Fläche dargestellten charakteristischen Elements (201, 301) innerhalb des Raumbereichs (403, 404), ein Volumen eines als Volumen dargestellten charakteristischen Elements (201, 301) innerhalb des Raumbereichs (403, 404).

6. Verfahren (100) nach einem der voranstehenden Ansprüche, wobei das Ermitteln (109) des Abschnitts (303) umfasst:
- Aufstellen (127) einer Mehrzahl von Positionshypothesen (313) möglicher Positionen (P) der Kartendarstellung (200) innerhalb der semantischen Straßenkarte (300), wobei das Aufstellen (127) der Positionshypothesen umfasst:
- Ausführen (129) einer Positionstranslation der Schlüsselstellen der charakteristischen Elemente (301) in der semantischen Straßenkarte (300), deren Deskriptoren (400) mit Deskriptoren (400) von charakteristischen Elementen (201) der Kartendarstellung (200) übereinstimmen, innerhalb der semantischen Straßenkarte (300) um Distanzen, die Distanzen in der Kartendarstellung (200) der jeweils entsprechenden charakteristischen Elemente (201) der Kartendarstellung (200) zu einem Mittelpunkt der Kartendarstellung (200) entsprechen;
- Identifizieren (131) von Positionen der Cluster als Positionshypothesen (313) für die Kartendarstellung (200); und
- Verifizieren (133) der Positionshypothesen (313) als Position (P) des Abschnitts (303); wobei das Verifizieren umfasst:
- Ermitteln (135) von Anzahlen von in Zentren der Cluster (312) verschobenen Schlüsselstellen und Identifizieren des Clusters (312) mit größter Anzahl von in das Zentrum des Clusters (312) verschobenen Schlüsselstellen als Positionshypothese (315) des Abschnitts (305) mit einer größten Übereinstimmung mit der Kartendarstellung (200); oder
- Abbilden (137) der Kartendarstellung (200) in die semantische Straßenkarte (300) gemäß den Positionshypothesen (313), Vergleichen der charakteristischen Elemente (301) an der Position der Positionshypothese (313) mit den charakteristischen Elementen (201) der an die Position der Positionshypothese (313) abgebildeten Kartendarstellung (200) und Identifizieren der Positionshypothese (315) mit einer größten Anzahl von übereinstimmenden charakteristischen Elementen (201, 301).

7. Verfahren (100) nach Anspruch 6, wobei das Vergleichen der der charakteristischen Elemente (301) an der Position der Positionshypothese (313) mit den charakteristischen Elementen (201) der an die Position der Positionshypothese (313) abgebildeten Kartendarstellung (200) eine Ausführung eines RANSAC-Algorithmus umfasst.

8. Verfahren (100) nach einem der voranstehenden Ansprüche, ferner umfassend:
- Ausführen (139) einer Vorpositionierung der Kartendarstellung (200) relativ zur semantischen Straßenkarte (300) basierend auf einer Geoposition des durch die Kartendarstellung (200) dargestellten Umfelds (501) des Fahrzeugs (500); und
- Ermitteln (141) eines Teilabschnitts (317) der semantischen Straßenkarte (300) basierend auf der ermittelten Geoposition, wobei die charakteristischen Elemente (301) der semantischen Straßenkarte (300) innerhalb des Teilabschnitts (317) bestimmt werden.

9. Verfahren (600) zum Ergänzen einer semantischen Straßenkarte (300) mit Information einer Kartendarstellung (200) eines Umfelds (501) eines Fahrzeugs (500), umfassend:
- Ausführen (601) des Verfahrens (100) zum Positionieren einer Kartendarstellung (200) eines Umfelds (501) eines Fahrzeugs (500) in einer semantischen Straßenkarte (300) nach einem der voranstehenden Ansprüche 1 bis 8; und
- Integrieren (603) von Information der Kartendarstellung (200) in den ermittelten Abschnitt (303) der semantischen Straßenkarte (300).

10. Recheneinheit (505), die eingerichtet ist, das Verfahren (100) zum Positionieren einer Kartendarstellung (200) eines Umfelds (501) eines Fahrzeugs (500) in einer semantischen Straßenkarte (300) nach einem der voranstehenden Ansprüche 1 bis 8 und/oder das Verfahren (600) zum Ergänzen einer semantischen Straßenkarte (300) mit Information einer Kartendarstellung (200) eines Umfelds (501) eines Fahrzeugs (500) nach Anspruch 9 auszuführen.

11. Computerprogrammprodukt (700) umfassend Befehle, die bei der Ausführung des Programms durch eine Datenverarbeitungseinheit diese veranlassen, das Verfahren (100) zum Positionieren einer Kartendarstellung (200) eines Umfelds (501) eines Fahrzeugs (500) in einer semantischen Straßenkarte (300) nach einem der voranstehenden Ansprüche 1 bis 8 und/oder das Verfahren (600) zum Ergänzen einer semantischen Straßenkarte (300) mit Information einer Kartendarstellung (200) eines Umfelds (501) eines Fahrzeugs (500) nach Anspruch 9 auszuführen.

## Claims

1. Method (100) for positioning a map representation (200) of an environment (501) of a vehicle (500) in a semantic road map (300), comprising:
- receiving (101) environment sensor data (505) of at least one environment sensor (503) of a vehicle (500);
- creating (103) a map representation (200) of an environment (501) of the vehicle (500) on the basis of the environment sensor data (505) of the vehicle (500);
- ascertaining (105) characteristic elements (201) in the map representation (200) and characteristic elements (301) in a semantic road map (300) depicting the environment (501);
- comparing (107) the characteristic elements (201) of the map representation (200) with the characteristic elements (301) of the semantic road map (300), wherein comparing (107) the characteristic elements (201, 301) comprises:
- ascertaining (113) descriptors (400) for key locations of each characteristic element (301) of the semantic road map (300) and descriptors (400) for key locations of each characteristic element (201) of the map representation (200),
- wherein a key location of a characteristic element (201) is given by a point of the characteristic element (201) within the map representation (200) or within the semantic road map (300),
wherein ascertaining (113) the descriptors (400) of the key locations of the characteristic elements (201, 301) comprises:
- determining (117) a geometric grid structure (401) of the descriptor (400) at a position of the key location of the respective characteristic element (201, 301) within the map representation (200) or the semantic road map (300), wherein the geometric grid structure (401) comprises a plurality of mutually adjacent spatial regions (403);
- ascertaining (119), for each spatial region (403) of the grid structure (401), a property of the respective characteristic element (201, 301);
- comparing (121) values of the properties within a spatial region (403) with values of the property for spatial regions (404) of the geometric structure (401) that are directly adjacent to the spatial region (403); and
- assigning (123) a numerical value 1 to a spatial region (403) of the grid structure (401) if the value of the property in the respective spatial region (403) is greater than values of the property in directly adjacent spatial regions (404), and assigning a numerical value 0 to a spatial region (403) if the value of the property in the spatial region (403) is not greater than values of the property in the directly adjacent spatial regions (404);
and
- comparing (115) the descriptors (400) of the key locations of the characteristic elements (301) of the semantic road map (300) with the descriptors (400) of the key locations of the characteristic elements (201) of the map representation (200), wherein characteristic elements (201, 301) match if the descriptors (400) of the key locations of the respective elements (201, 301) match;
- ascertaining (109) a portion (303) of the semantic road map (300) for which at least one characteristic element (301) of the portion (303) of the semantic road map (300) matches at least one characteristic element (201) of the map representation (200) and for which the map representation (200) and the semantic road map (300) describe an identical region of the environment (501) of the vehicle (500); and
- identifying (111) a position (P) of the portion (303) within the semantic road map (300) as the position of the map representation (200) in the semantic road map (300).

2. Method (100) according to Claim 1, wherein comparing (121) the descriptors (400) comprises:
- performing (125) a nearest neighbour search in respect of the descriptors (400) on a k-dimensional tree.

3. Method (100) according to either of the preceding claims, wherein descriptors (400) are determined for characteristic elements (201, 301) of different semantic classes, and wherein exclusively descriptors (400) of characteristic elements (201, 301) of an identical semantic class are compared with one another.

4. Method (100) according to Claim 3, wherein the semantic classes of the characteristic elements (201, 301) comprise: roadway markings (207, 307), roadway boundaries (205, 305), street lights (209, 309), traffic lights (311), traffic signs.

5. Method (100) according to any of the preceding claims, wherein the property is one from the following list: a point density of points within the spatial region (403, 404), a length (L) of a characteristic element (201, 301) represented as a line within the spatial region (403, 404), a surface area of a characteristic element (201, 301) represented as a surface within the spatial region (403, 404), a volume of a characteristic element (201, 301) represented as a volume within the spatial region (403, 404).

6. Method (100) according to any of the preceding claims, wherein ascertaining (109) the portion (303) comprises:
- formulating (127) a plurality of position hypotheses (313) of possible positions (P) of the map representation (200) within the semantic road map (300), wherein formulating (127) the position hypotheses comprises:
- performing (129) a position translation of the key locations of the characteristic elements (301) in the semantic road map (300), the descriptors (400) of which match descriptors (400) of characteristic elements (201) of the map representation (200), within the semantic road map (300) by distances corresponding to distances in the map representation (200) of the respectively corresponding characteristic elements (201) of the map representation (200) with respect to a centre point of the map representation (200);
- identifying (131) positions of the clusters as position hypotheses (313) for the map representation (200); and
- verifying (133) the position hypotheses (313) as the position (P) of the portion (303); wherein the verifying comprises:
- ascertaining (135) numbers of key locations displaced into centres of the clusters (312) and identifying the cluster (312) with the largest number of key locations displaced into the centre of the cluster (312) as the position hypothesis (315) of the portion (305) with the greatest match to the map representation (200); or
- mapping (137) the map representation (200) into the semantic road map (300) according to the position hypotheses (313), comparing the characteristic elements (301) at the position of the position hypothesis (313) with the characteristic elements (201) of the map representation (200) mapped to the position of the position hypothesis (313) and identifying the position hypothesis (315) with a largest number of matching characteristic elements (201, 301).

7. Method (100) according to Claim 6, wherein comparing the characteristic elements (301) at the position of the position hypothesis (313) with the characteristic elements (201) of the map representation (200) mapped to the position of the position hypothesis (313) comprises an execution of a RANSAC algorithm.

8. Method (100) according to any of the preceding claims, furthermore comprising:
- performing (139) a pre-positioning of the map representation (200) relative to the semantic road map (300) on the basis of a geoposition of the environment (501) of the vehicle (500) that is represented by the map representation (200); and
- ascertaining (141) a subportion (317) of the semantic road map (300) on the basis of the ascertained geoposition, wherein the characteristic elements (301) of the semantic road map (300) within the subportion (317) are determined.

9. Method (600) for supplementing a semantic road map (300) with information of a map representation (200) of an environment (501) of a vehicle (500), comprising:
- performing (601) the method (100) for positioning a map representation (200) of an environment (501) of a vehicle (500) in a semantic road map (300) according to any of the preceding Claims 1 to 8; and
- integrating (603) information of the map representation (200) into the ascertained portion (303) of the semantic road map (300).

10. Computing unit (505) configured to perform the method (100) for positioning a map representation (200) of an environment (501) of a vehicle (500) in a semantic road map (300) according to any of the preceding Claims 1 to 8 and/or the method (600) for supplementing a semantic road map (300) with information of a map representation (200) of an environment (501) of a vehicle (500) according to Claim 9.

11. Computer program product (700) comprising instructions which, when the program is executed by a data processing unit, cause the latter to perform the method (100) for positioning a map representation (200) of an environment (501) of a vehicle (500) in a semantic road map (300) according to any of the preceding Claims 1 to 8 and/or the method (600) for supplementing a semantic road map (300) with information of a map representation (200) of an environment (501) of a vehicle (500) according to Claim 9.

## Revendications

1. Procédé (100) de positionnement d'un affichage cartographique (200) d'un environnement (501) d'un véhicule (500) sur une carte routière (300) sémantique, comprenant :
- réception (101) de données de capteur d'environnement (505) d'au moins un capteur d'environnement (503) d'un véhicule (500) ;
- création (103) d'un affichage cartographique (200) d'un environnement (501) du véhicule (500) sur la base des données de capteur d'environnement (505) du véhicule (500) ;
- détermination (105) d'éléments caractéristiques (201) sur l'affichage cartographique (200) et d'éléments caractéristiques (301) sur une carte routière (300) sémantique reproduisant l'environnement (501) ;
- comparaison (107) des éléments caractéristiques (201) de l'affichage cartographique (200) aux éléments caractéristiques (301) de la carte routière (300) sémantique, la comparaison (107) des éléments caractéristiques (201, 301) comprenant :
- détermination (113) de descripteurs (400) pour des passages clés de chaque élément caractéristique (301) de la carte routière (300) sémantique et de descripteurs (400) pour des passages clés de chaque élément caractéristique (201) de l'affichage cartographique (200),
- un passage clé d'un élément caractéristique (201) étant donné par un point de l'élément caractéristique (201) dans l'affichage cartographique (200) ou dans la carte routière (300) sémantique,
la détermination (113) des descripteurs (400) des passages clés des éléments caractéristiques (201, 301) comprenant :
- détermination (117) d'une structure de grille (401) géométrique du descripteur (400) sur une position du passage clé de l'élément caractéristique (201, 301) respectif dans l'affichage cartographique (200) ou la carte routière (300) sémantique,
la structure de grille (401) géométrique comprenant une multitude de zones spatiales (403) se jouxtant mutuellement ;
- détermination (119) pour chaque zone spatiale (403) de la structure de grille (401) d'une propriété de l'élément caractéristique (201, 301) supplémentaire ;
- comparaison (121) de valeurs des propriétés à l'intérieur d'une zone spatiale (403) à des valeurs de la propriété pour des zones spatiales (404) jouxtant directement la zone spatiale (403) de la structure (401) géométrique ; et
- association (123) d'une valeur numérique 1 à une zone spatiale (403) de la structure de grille (401) si la valeur de la propriété dans la zone spatiale (403) respective est supérieure à des valeurs de la propriété dans des zones spatiales (404) directement adjacentes, et association d'une valeur numérique 0 à une zone spatiale (403) si la valeur de la propriété dans la zone spatiale (403) n'est pas supérieure à des valeurs de la propriété dans les zones spatiales (404) directement adjacentes ;
et
- comparaison (115) des descripteurs (400) des passages clés des éléments caractéristiques (301) de la carte routière (300) sémantique aux descripteurs (400) des passages clés des éléments caractéristiques (201) de l'affichage cartographique (200), des éléments caractéristiques (201, 301) concordant si les descripteurs (400) des passages clés des éléments (201, 301) respectifs concordent ;
- détermination (109) d'une section (303) de la carte routière (300) sémantique, pour laquelle au moins un élément caractéristique (301) de la section (303) de la carte routière (300) sémantique concorde avec au moins un élément caractéristique (201) de l'affichage cartographique (200), et pour laquelle l'affichage cartographique (200) et la carte routière (300) sémantique décrivent une zone identique de l'environnement (501) du véhicule (500) ; et
- identification (111) d'une position (P) de la section (303) dans la carte routière (300) sémantique en tant que position de l'affichage cartographique (200) sur la carte routière (300) sémantique.

2. Procédé (100) selon la revendication 1, la comparaison (121) des descripteurs (400) comprenant :
- exécution (125) d'une recherche plus proches voisins des descripteurs (400) sur une arborescence à k dimensions.

3. Procédé (100) selon l'une des revendications précédentes, des descripteurs (400) pour des éléments caractéristiques (201, 301) de différentes classes sémantiques étant déterminés et exclusivement des descripteurs (400) d'éléments caractéristiques (201, 301) d'une même classe sémantique étant comparés les uns aux autres.

4. Procédé (100) selon la revendication 3, les classes sémantiques des éléments caractéristiques (201, 301) comprenant : des marquages de chaussée (207, 307), des délimitations de chaussée (205, 305), des réverbères (209, 309), des feux de circulation (311), des panneaux de signalisation.

5. Procédé (100) selon l'une des revendications précédentes, la propriété étant une propriété issue de la liste suivante : une densité de points à l'intérieur de la zone spatiale (403, 404), une longueur (L) d'un élément caractéristique (201, 301) affiché en tant que ligne à l'intérieur de la zone spatiale (403, 404), une superficie d'un élément caractéristique (201, 301) représenté en tant que surface à l'intérieur de la zone spatiale (403, 404), un volume d'un élément caractéristique (201, 301) représenté en tant que volume à l'intérieur de la zone spatiale (403, 404).

6. Procédé (100) selon l'une des revendications précédentes, la détermination (109) de la section (303) comprenant :
- formulation (127) d'une multitude d'hypothèses (313) de position d'éventuelles positions (P) de l'affichage cartographique (200) à l'intérieur de la carte routière (300) sémantique, la formulation (127) des hypothèses de position comprenant :
- exécution (129) d'une translation de position des passages clés des éléments caractéristiques (301) sur la carte routière (300) sémantique, dont les descripteurs (400) concordent avec des descripteurs (400) d'éléments caractéristiques (201) de l'affichage cartographique (200), dans la carte routière (300) sémantique de distances, qui correspondent à des distances sur l'affichage cartographique (200) des éléments caractéristiques (201) respectivement correspondants de l'affichage cartographique (200) par rapport à un centre de l'affichage cartographique (200) ;
- identification (131) de positions des groupes en tant qu'hypothèses (313) de position pour l'affichage cartographique (200) ; et
- vérification (133) des hypothèses (313) de position en tant que position (P) de la section (303) ; la vérification comprenant :
- détermination (135) de nombres de passages clés déplacés aux centres des groupes (312) et identification du groupe (312) avec un nombre de passages clés déplacés au centre du groupe (312) le plus grand en tant qu'hypothèse (315) de position de la section (305) avec une concordance la plus grande avec l'affichage cartographique (200) ; ou
- reproduction (137) de l'affichage cartographique (200) sur la carte routière (300) sémantique selon les hypothèses (313) de position, comparaison des éléments caractéristiques (301) sur la position de l'hypothèse (313) de position aux éléments caractéristiques (201) de l'affichage cartographique (200) reproduit sur la position de l'hypothèse (313) de position, et identification de l'hypothèse (315) de position avec un nombre d'éléments caractéristiques (201, 301) concordants le plus grand.

7. Procédé (100) selon la revendication 6, la comparaison des éléments caractéristiques (301) sur la position de l'hypothèse (313) de position aux éléments caractéristiques (201) de l'affichage cartographique (200) reproduit sur la position de l'hypothèse (313) de position comprenant une exécution d'un algorithme RANSAC.

8. Procédé (100) selon l'une des revendications précédentes, comprenant en outre :
- exécution (139) d'un prépositionnement de l'affichage cartographique (200) par rapport à une carte routière (300) sémantique sur la base d'une position géographique de l'environnement (501) du véhicule (500) affiché par l'affichage cartographique (200) ; et
- détermination (141) d'une section partielle (317) de la carte routière (300) sémantique sur la base de la position géographique déterminée, les éléments caractéristiques (301) de la carte routière (300) sémantique à l'intérieur de la section partielle (317) étant déterminés.

9. Procédé (600) destiné à compléter une carte routière (300) sémantique avec des informations d'un affichage cartographique (200) d'un environnement (501) d'un véhicule (500), comprenant :
- exécution (601) du procédé (100) de positionnement d'un affichage cartographique (200) d'un environnement (501) d'un véhicule (500) sur une carte routière (300) sémantique selon l'une des revendications précédentes 1 à 8 ; et
- intégration (603) d'informations de l'affichage cartographique (200) dans la section (303) déterminée de la carte routière (300) sémantique.

10. Unité de calcul (505) qui est mise au point pour exécuter le procédé (100) de positionnement d'un affichage cartographique (200) d'un environnement (501) d'un véhicule (500) sur une carte routière (300) sémantique selon l'une des revendications précédentes 1 à 8 et/ou le procédé (600) destiné à compléter une carte routière (300) sémantique avec des informations d'un affichage cartographique (200) d'un environnement (501) d'un véhicule (500) selon la revendication 9.

11. Produit-programme d'ordinateur (700) comprenant des instructions, qui amènent, lors de l'exécution du programme par une unité de traitement de données, celle-ci à exécuter le programme (100) de positionnement d'un affichage cartographique (200) d'un environnement (501) d'un véhicule (500) sur une carte routière (300) sémantique selon l'une des revendications précédentes 1 à 8 et/ou le procédé (600) destiné à compléter une carte routière (300) sémantique avec des informations d'un affichage cartographique (200) d'un environnement (501) d'un véhicule (500) selon la revendication 9.
